Europäisches Patentamt

European Patent Office

Office européen des brevets

(11) Veröffentlichungsnummer: **0 417 678 A1**

## (12) EUROPÄISCHE PATENTANMELDUNG

(21) Anmeldenummer: 90117342.7

(22) Anmeldetag: 08.09.90

(51) Int. Cl.⁵: **B60H 1/00**

(30) Priorität: 12.09.89 DE 8910898 U

(43) Veröffentlichungstag der Anmeldung:
20.03.91 Patentblatt 91/12

(84) Benannte Vertragsstaaten:
**ES FR GB IT**

(71) Anmelder: **AURORA Konrad G. Schulz GmbH
& Co
Südring 4
W-6933 Mudau/Odenwald(DE)**

(72) Erfinder: **Schulz, Joachim
Neudorfer Strasse 2
W-8762 Amorbach(DE)**
Erfinder: **Thelen, Werner
Löserweg 5
W-6967 Buchen(DE)**

(74) Vertreter: **Baronetzky, Klaus et al
Patentanwalte Dipl.-Ing. R. Splanemann, Dr.
B. Reitzner, Dipl.-Ing. K. Baronetzky Tal 13
W-8000 München 2(DE)**

(54) Belüftungs-, Beheizungs- und/oder Kühlvorrichtung.

(57) Bei der erfindungsgemäßen Lüftungs-, Beheizungs- und/oder Kühlvorrichtung (10) ist ein Aggregat (16) vorgesehen, das einen Aggregateinlaß (18) aufweist, der seitlich in einem Schacht 14 angeordnet ist. Der erfindungsgemäße Schacht (14) erzeugt einen relativen Unterdruck am Aggregateinlaß (18) im Verhältnis zu dem Überdruck, der an einer Frischluft-Einlaßöffnung (12) anliegt.

Die Erfindung betrifft eine Belüftungs-, Beheizungs- und/oder Kühlvorrichtung gemäß dem Oberbegriff von Anspruch 1.

Bei derartigen Vorrichtungen ist es bekannt, Frischluft durch ein Aggregat strömen zu lassen, wobei die bei zunehmender Fahrtgeschwindigkeit zunehmende Frischluftströmung die Wirkung des mit einem Gebläse ausgestatteten Aggregats unterstützt. Um diese Unterstützung zu fördern, hat man die Frischluft-Einlaßöffnung immer möglichst groß und strömungstechnisch günstig ausgebildet, um die Gebläseleistung gering halten zu können.

Ferner ist es bekannt, Prallflächen an und in dem Aggregat vorzusehen, die die direkte Beaufschlagung der Fahrgäste At der eintretenden Frischluftströmung verhindern.

Die Wirksamkeit der bekannten Vorrichtungen ist jedoch begrenzt, wobei insbesondere die Defrosterwirkung der bekannten Vorrichtungen viel zu wünschen übrig läßt, insbesondere, wenn - wie üblich - das Abtauen der Windschutzscheibe im Stadtverkehr erfolgt.

Es sind auch zwei Kanäle aufweisende Aggregate bekannt, die mittels zweier Gebläse die gewünschte Lufttemperatur sehr genau und mit gutem Regelverhalten regeln können. Hierzu ist ein Kanal mit unbeheizter Frischluft vorgesehen, während die Frischluft in dem weiteren Kanal beheizt wird. Trotz aller Vorteile dieses Systems ist das Regelverhalten bei höheren Fahrtgeschwindigkeiten etwas unbefriedigend.

Man hat versucht, die Gebläse größer und damit unempfindlicher zu machen. Dies führt jedoch zu zusätzlichen Gewichtsbelastungen und Kostennachteilen.

Es ist auch bereits vorgeschlagen worden, die Regelcharakteristik eines Regelsystems in dem Aggregat durch eine geschwindigkeitsabhängige Meßgröße zu beeinflussen. Auch diese Lösung ist aber trotz ihrer Kompliziertheit vergleichsweise unbefriedigend, da sich eine weitgehende Unabhängigkeit von der Geschwindigkeit doch nicht erzielen läßt.

Demgegenüber ist es Aufgabe der Erfindung, eine Lüftungs-, Beheizungs- und/oder Kühlvorrichtung gemäß dem Oberbegriff von Anspruch 1 zu schaffen, die eine verbesserte Effizienz gerade auch für das Defrosten sowohl bei hohen als auch niedrigen Fahrtgeschwindigkeiten ermöglicht.

Diese Aufgabe wird erfindungsgemäß durch Anspruch 1 gelöst. Vorteilhafte weiterbildungen ergeben sich aus den Unteransprüchen.

Besonders günstig ist es, daß sich mit der erfindungsgemäßen Lüftungs-, Beheizungs- und/oder Kühlvorrichtung ein überraschend günstiges Regelverhalten erzielen läßt, das dazu führt, daß bei geringen Fahrtgeschwindigkeiten eine einwandfreie Belüftung der Scheiben des Fahrzeugs mit Warmluft möglich ist und diese auch bei hohen Fahrtgeschwindigkeiten voll gegeben ist. Dies ist auf die konzentrierte Beaufschlagung mit dem vergleichsweise kleinen und heißen Warmluftstrom zurückzuführen, der durch den Fahrtwind nicht abgekühlt wird; zudem wird die Regelcharakteristik des Aggregats auch nicht "überfahren", so daß eine einmal gewählte Einstellung nicht dauernd nachgeregelt werden muß.

Andererseits ist es besonders günstig, daß sich die erfindungsgemäßen Vorteile mit einer baulich so einfachen und preisgünstigen Lösung erzielen lassen. Man kann praktisch einen Aggregat einlaß unterhalb der Frischluft-Einlaßöffnung vorsehen, diese mit einem Grill versehen und den erfindungsgemäßen Schacht baulich einfach ausbilden, und es ergeben sich die Vorteile, daß ein in dem Aggregat eingebautes Regelsystem unbeeinflußt von sonstigen Betriebsparametern des Kraftfahrzeugs die gewünschte Belüftungssituation erzeugt. Besonders günstig ist es, wenn der Aggregateinlaß an einer Position im Schacht angeordnet ist, die einen Druck aufweist, der dem Atmosphärendruck entspricht oder knapp unter diesem liegt. In diesem Falle wird das Schließverhalten von Rückschlagklappen der einzelnen Gebläse je noch unterstützt.

Gemäß einer alternativen Ausführungsform ist der Krümmlungs- und Ablenkungsbereich des Schachts so ausgebildet, daß sich zwar bei niedrigen Fahrtgeschwindigkeiten ein geringer Überdruck am Aggregateinlaß einstellt, dieser jedoch bei höheren Fahrtgeschwindigkeiten nicht verstärkt wird, so daß der Krümmungs- und Ablenkungsbereich im Ergebnis als Drossel wirkt, ohne deren Nachteile aufzuweisen.

Gemäß einer weiteren Abwandlung ist es vorgesehen, das Aggregat von unten unter die Spritzwand zu hängen und ein separates Bodenblech nicht vorzusehen. In dieser Ausführungsform ist es günstig, die nach unten freiliegenden Teile mit einer Wärmedämm schicht von beispielsweise 2,5 cm Stärke zu versehen.

Der Schacht kann als preisgünstiges Spritzgußteil separat hergestellt werden oder sich durch eine entsprechende Anordnung des Aggregats hinter dem Stirnblech eines Omnibus automatisch ergeben.

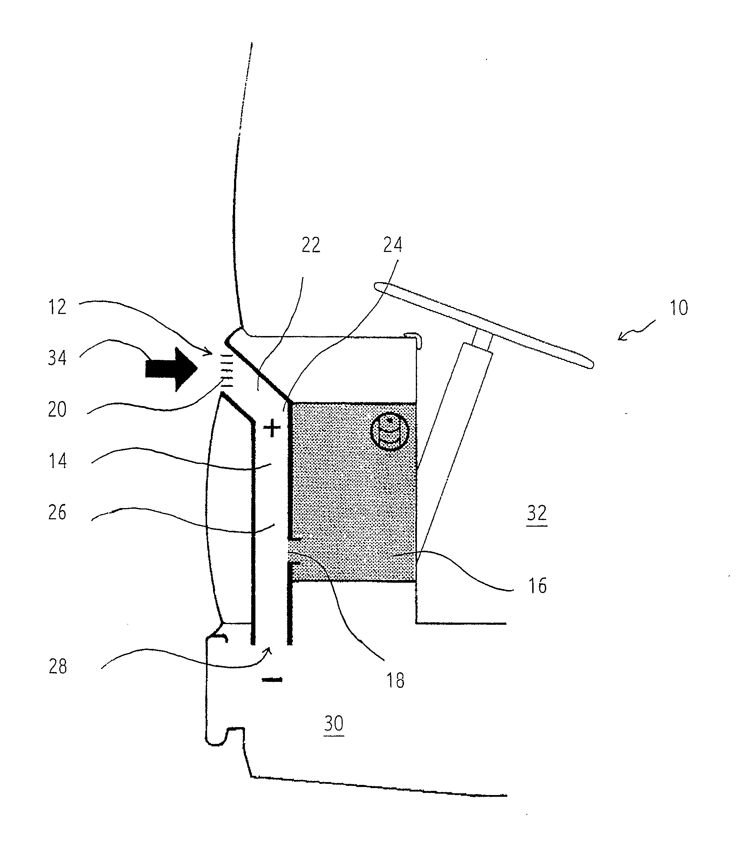

Weitere Vorteile, Einzelheiten und Merkmale der Erfindung ergeben sich aus der nachfolgenden Beschreibung eines Ausführungsbeispiels anhand der Zeichnung.

Die einzige Figur der Zeichnung zeigt schematisch im Schnitt eine erfindungsgemäße Lüftungs-, Beheizungs- und/oder Kühlvorrichtung.

Die erfindungsgemäße Lüftungs-, Beheizungs- und/oder Kühlvorrichtung 10 weist eine Frischluft-Einlaßöffnung 12, einen Schacht 14 und ein Aggregat 16 auf, das über einen Aggregateinlaß 18 mit dem Schacht 14 verbunden ist.

Der Schacht 14 beginnt unmittelbar hinter der Frischluft-Einlaßöffnung 12, die mit einem Grill 20 versehen ist. Es schließt sich ein im wesentlichen horizontal bzw. schräg nach hinten/unten verlaufender Schachtabschnitt 22 an, der in einen Krümmungs-und Ablenkungsbereich 24 übergeht. An den Krümmungs- und Ablenkungsbereich 24 schließt sich ein vertikaler Schachtabschnitt 26 an, der in einem Auslaß 28 mündet. Etwa in der Mitte des vertikalen Schachtabschnitts 26, vorzugsweise bei Beginn des unteren Drittels, ist der Aggregateinlaß 18 als seitliche Öffnung des Schachts 14 vorgesehen.

Der Auslaß 28 mündet in einen Unterdruckbereich einer Bodengruppe 30 des Kraftfahrzeugs 32. Die eintretende Frischluft 34 durchtritt den Grill 20 und gelangt durch den Schachtabschnitt 22 in dem vertikalen Schachtabschnitt 26. Bei eingeschaltetem Aggregat 16 gelangt mindestens ein Teil der eintretenden Frischluff 34, im Grenzfall die gesamte Frischluft, in das Aggregat 16 und wird dort in zwei - nicht dargestellte - Kanäle aufgeteilt.

Während insbesondere bei höheren Fahrtgeschwindigkeiten im Bereich der Frischluft-Einlaßöffnung 12 stets ein Überdruck herrscht, da diese im Staubereich des als Omnibus ausgebildeten Kraftfahrzeugs 32 vorgesehen ist, entsteht aus zwei Gründen am Aggregateinlaß 18 relativ zu diesem Überdruck ein Unterdruck: Zum einen wirkt der Grill 20 und der Krümmungs- und Ablenkungs bereich 24 als Strömungswiderstand. Zum anderen steht eine Luftströmung an dem Aggregateinlaß 18 vorbei zum Auslaß 28 zur Verfügung, die ebenfalls an dem Aggregateinlaß 18 einen relativen Unterdruck erzeugt.

Durch die Kombination dieser Maßnahmen wird der auch bei hoher Fahrtgeschwindigkeit anstehende Überdruck auf den atmosphärischen Druck reduziert, der aber andererseits auch bei stehendem Omnibus am Aggregateinlaß 18 anliegt. Hiermit bleibt die Regelcharakteristik des Regelsystems in dem Aggregat 16 voll und geschwindigkeitsunabhängig erhalten.

Die Erfindung ist nicht auf die Verwendung in Omnibussen beschränkt. Vielmehr lassen sich erfindungsgemäße Lüftungs-, Beheizungs- und/oder Kühlvorrichtungen 10 in allen solchen Fahrzeugen einsetzen, bei denen an der Frischluft-Einlaßöffnung 12 bei höheren Fahrtgeschwindigkeiten ein Überdruck ansteht.

## Ansprüche

1. Belüftungs-, Beheizungs- und/oder Kühlvorrichtung für Kraftfahrzeuge, insbesondere Komfort-Nutzfahrzeuge, wie Omnibusse, mit einem mindestens einen Kanal, der von Frischluft durchströmbar ist, aufweisenden Aggregat, wobei eine Frischluft-Einlaßöffnung an dem Kraftfahrzeug vorgesehen ist, dadurch **gekennzeichnet,** daß ein Schacht (14) an die Frischluft-Einlaßöffnung (12) angeschlossen ist, der einen separaten Auslaß (28) in einen Unterdruckbereich aufweist.

2. Belüftungs-, Beheizungs- und/oder Kühlvorrichtung nach Anspruch 1, dadurch gekennzeichnet, daß das Aggregat (16) zwei Kanäle und ein eingangsdruckempfindliches Regelsystem für das Verhältnis zweier Luftströme, wie eines beheizten und eines unbeheizten Frischluftstroms, aufweist.

3. Belüftungs-, Beheizungs- und/oder Kühlvorrichtung nach einem der vorhergehenden Ansprüche, dadurch gekennzeichnet, daß die Kanäle in dem Aggregat (16) je separat steuerbare Gebläse und zugeordnete Rückschlagklappen aufweisen.

4. Belüftungs-, Beheizungs- und/oder Kühlvorrichtung nach einem der vorhergehenden Ansprüche, dadurch gekennzeichnet, daß ein Aggregateinlaß (18) seitlich in dem Schacht (14) vorgesehen ist.

5. Belüftungs-, Beheizungs- und/oder Kühlvorrichtung nach einem der vorhergehenden Ansprüche, dadurch gekennzeichnet, daß zwischen der Frischluft-Einlaßöffnung (12) und einem Aggregateinlaß (18) ein Strömungswiderstand wie ein Grill (20), eine Strömungsumlenkung (24) od. dgl. angeordnet ist.

6. Belüftungs-, Beheizungs- und/oder Kühlvorrichtung nach einem der vorhergehenden Ansprüche, dadurch gekennzeichnet, daß der Schacht (14) als sich im wesentlichen senkrecht nach unten und mit gleichbleibendem Strömungsquerschnitt verlaufender Schacht (14) ausgebildet ist, der im Bereich der Bodengruppe (30) des Fahrzeugs (32) in dem offenen Auslaß (28) endet.

7. Belüftungs-, Beheizungs- und/oder Kühlvorrichtung nach einem der vorhergehenden Ansprüche, dadurch gekennzeichnet, daß eine Position für einen Aggregateinlaß (18) im Verlauf des Schachts (14) dadurch festgelegt wird, daß der Druckverlauf im Schacht (14) bei den auftretenden Anströmgeschwindigkeiten der Frischluft-Einlaßöffnung (12), entsprechend der Fahrtgeschwindigkeit des Kraftfahrzeugs (32), ermittelt wird und die Position so gewählt wird, daß bei keiner Strömungsgeschwindigkeit ein höherer Druck als der atmosphärische Druck anliegt.

8. Belüftungs-, Beheizungs- und/oder Kühlvorrichtung nach einem der vorhergehenden Ansprüche, dadurch gekennzeichnet, daß der Schacht (14) sich nach unten aufweitet und der Aggregateinlaß (18) schräg hinter/unterhalb der Frischluft-Einlaßöffnung (12), bezogen auf die Seitenansicht des Kraftfahrzeugs (32), angeordnet ist.

9. Belüftungs-, Beheizungs- und/oder Kühlvorrichtung nach einem der vorhergehenden Ansprüche, dadurch gekennzeichnet, daß angrenzend an die Frischluft-Einlaßöffnung (12) ein im wesentlichen waagerecht/schräg nach unten verlaufender Schachtabschnitt (22) vorgesehen ist, an welchen sich ein Krümmungs- und Ablenkungsbereich (24) anschließt, dessen Außenradius so geformt ist, daß die einströmende Frischluft (34) von einem Aggregateinlaß (18) abgehalten wird.

10. Belüftungs-, Beheizungs- und/oder Kühlvorrichtung nach einem der vorhergehenden Ansprüche, dadurch gekennzeichnet, daß ein Krümmungs- und Ablenkungsbereich (24) in dem Schacht (14) mit zunehmender Frischluftströmung die einströmende Frischluft (34) von einem Aggregateinlaß (18) ablenkt und die Position des Aggregateinlasses (18) entlang des Schachts (14) so gewählt ist, daß bei geringer Strömungsgeschwindigkeit ein geringer Überdruck gegenüber dem atmosphärischen Druck besteht.

<table>
<tr><td colspan="4" align="center"><strong>Europäisches<br>Patentamt</strong></td></tr>
</table>

**Europäisches Patentamt**

# EUROPÄISCHER RECHERCHENBERICHT

Nummer der Anmeldung

## EP 90 11 7342

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,A | DE-B-1 123 930 (DR.ING.H.C.F.PORSCHE AG)<br>* das ganze Dokument *<br>- - - | 1,4,5,9,2,<br>6,8,10 | B 60 H 1/00 |
| Y,A | DE-A-3 300 075 (KÖRTVELYESSY)<br>* Seite 3, Zeile 1 - Seite 7, Zeile 15; Figuren *<br>- - - | 1,4,5,9,3,<br>7 | |
| A | DE-C-4 828 28 (MASCHINENFABRIK AUGSBURG-NÜRNBERG)<br>* das ganze Dokument *<br>- - - | 1,5,6 | |
| A | FR-A-1 328 439 (GERIN)<br>* das ganze Dokument *<br>- - - | 1,2,5,6 | |
| A | CH-A-2 987 26 (DAIMLER-BENZ AG)<br>* das ganze Dokument *<br>- - - - - | 2,3 | |

| | | | RECHERCHIERTE SACHGEBIETE (Int. Cl.5) |
|---|---|---|---|
| | | | B 60 H<br>B 60 N |

Der vorliegende Recherchenbericht wurde für alle Patentansprüche erstellt

| Recherchenort | Abschlußdatum der Recherche | Prüfer |
|---|---|---|
| Den Haag | 21 November 90 | BOLJANAC T. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes Dokument